# EUROPEAN PATENT APPLICATION

(11) **EP 1 477 706 A2**
(43) Date of publication of application: **17.11.2004**
(21) Application number: 04076385.6
(22) Date of filing: 12.05.2004
(51) Int. Cl.: F16H 19/04

(54) **Linear drive gear**

(30) Priority: 16.05.2003 SE 0301434
(71) Applicant: KINNARPS AB, 521 88 Kinnarp (SE)
(72) Inventor: Höglund, Per, 554 57 Jönköping (SE)
(74) Representative: Wallengren, Yngvar

(57) **Abstract**

The invention relates to a drive gear for a raisable and lowerable table, and having two cogged racks (2, 4) which are driven reciprocally in opposite directions by a gear wheel device (6) and a motor (8). The gear wheel device has at least two first gear wheels (10, 12) which are interconnected in order to rotate synchronously. The first gear wheels (10, 12) are disposed between the cogged racks for meshing with and driving thereof when the racks are wholly or partly displaced towards one another.

## Description

### TECHNICAL FIELD

The present invention relates to a linear drive gear comprising two cogged racks which are drivable reciprocally in opposite directions by means of a gear wheel device and a drive motor.

### BACKGROUND ART

A technical problem in the design and construction of linear drive gears is generally that the adjustment region is often too small in relation to the length of the drive gear in the wholly retracted state.

In the design and construction of linear drive gears that are used for operating raisable and lowerable tables, the ergonomic demands and the demands of the market are that the intention should be to obtain a construction which is as compact as possible in relation to the stroke length. In order to achieve the lower limit of the optimum adjustment region, it is necessary that the total height of the table, including table top, floor plate and lifting mechanism, does not exceed 600 mm. In order not to encroach on the leg room of the worker beneath the raisable and lowerable table, it is also a requirement that the width of the construction be as compact as possible. A further need in the art is that the maximum height of the table should be 1 300 mm.

Within the technical field of raisable and lowerable tables, use is made of many different lifting devices based, for example, on hydraulics, pneumatics, chain systems, gear wheel systems, belt systems, cable systems etc. The different lifting devices are housed in telescopic columns manufacture in several parts.

Hydraulic and pneumatic devices may satisfy the requirement that is placed on an optimum adjustment region for the linear drive gear, but a device driven by hydraulics entails far too often leakage of hydraulic fluid, which is not desirable, and pneumatic devices require a source of compressed air, which is not a normal element in an office environment.

Lifting devices based on chain systems, belt systems and cable systems are often of a complex construction which consists of carriers, chains and belts or cables that run on some form of wheel. These lifting devices give a maximum length which in total can be the centre spacing for the wheels plus twice the length of the carrier, in which event the construction gives a sufficiently long stroke length but is highly complex.

Linear drive gears with a gear wheel which drives two racks inside the column are available on the market today, but they do not satisfy the requirements for the above-mentioned optimum adjustment region, since the stroke length can never be more than twice the length of the drive gear in the totally retracted state, for which reason it is impossible to achieve the limits for the adjustment region as set out above.

### PROBLEM STRUCTURE

The present invention has for its object to design the linear drive gear intimated by way of introduction so that its adjustment region may be increased in order to satisfy ergonomic requirements and market demands without its total length in the retracted state being excessively large. The present invention further has for its object to realise a linear drive gear which obviates the drawbacks in the prior art. Finally, the present invention has for its object to realise a linear drive gear which displays a simple and economical construction, as well as compact outer dimensions.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: shows a linear drive gear according to the present invention in the retracted state, certain bulky details having been cut-away;
- Fig. 2: is a view corresponding to Fig. 1, the subject matter of the present invention being shown in the maximum protracted state;
- Fig. 3: is a perspective view of a gear wheel device included in the subject matter of the present invention;
- Fig. 4: shows an alternative embodiment of a drive gear in the retracted state; and
- Fig. 5: shows an alternative embodiment of a drive gear in the maximum protracted state.

### DESCRIPTION OF PREFERRED EMBODIMENT

While the present invention will be exemplified using a linear drive gear for a raisable and lowerable table, it is not restricted to this field of practical application, but may also be employed for raisable and lowerable chairs or alternatively beds. Another possible field of practical application could be a drive gear for an obliquely adjustable working surface which may be set at a desired angle in relation to the horizontal plane.

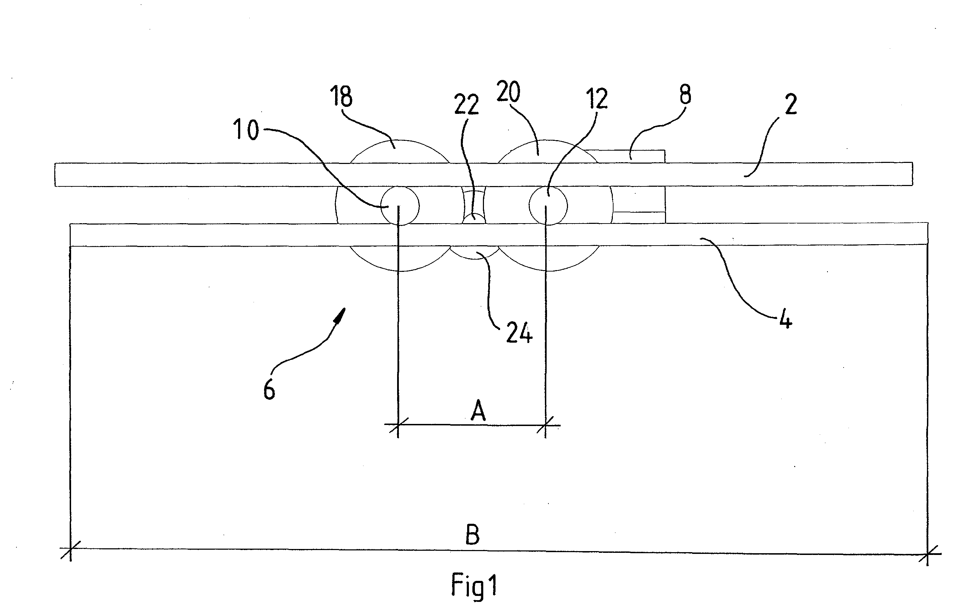

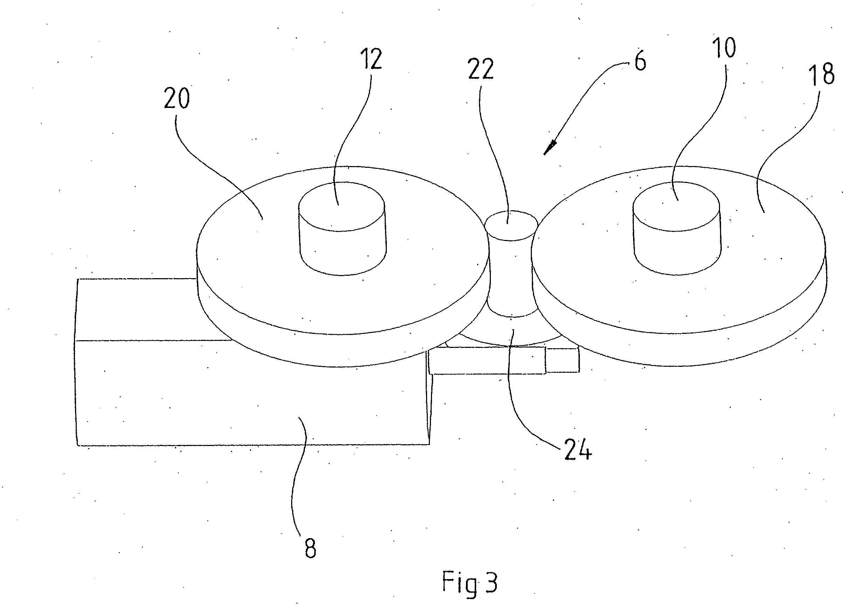

In Fig. 1, reference numerals 2 and 4 relate to two gear racks which are drivable reciprocally in opposing directions by means of a gear wheel device 6 and a drive motor 8. The gear wheel device 6, which is shown in Fig. 3, comprises at least two first gear wheels 10 and 12 which are rotatably united with at least two second gear wheels 18 and 20, forming two pairs each of first and second gear wheels.

The gear wheel device 6 further has a third gear wheel 22 which is rotatably united with a fourth gear wheel 24, the third gear wheel 22 being in mesh with each one of the second gear wheels 18 and 20. The drive motor 8 is in mesh with the fourth gear wheel 24 by the intermediary of a worm gear.

The above disclosures entail that the two first gear wheels 10 and 12 are interconnected via a synchroniser device which ensures that both of the first gear wheels always rotate synchronously, i.e. at the same speed of rotation and in the same direction of rotation.

The synchronisation also entails a synchronous driving of the gear wheel device 6, a synchronisation of the rotation of the first gear wheels 10 and 12, the second gear wheels 18 and 20, the third gear wheel 22 and the fourth gear wheel 24 being put into effect.

The two first gear wheels 10 and 12 are positioned a distance A from one another in the longitudinal direction of the racks 2 and 4, the distance A relating to the dimension between the centre axes of the first gear wheels .

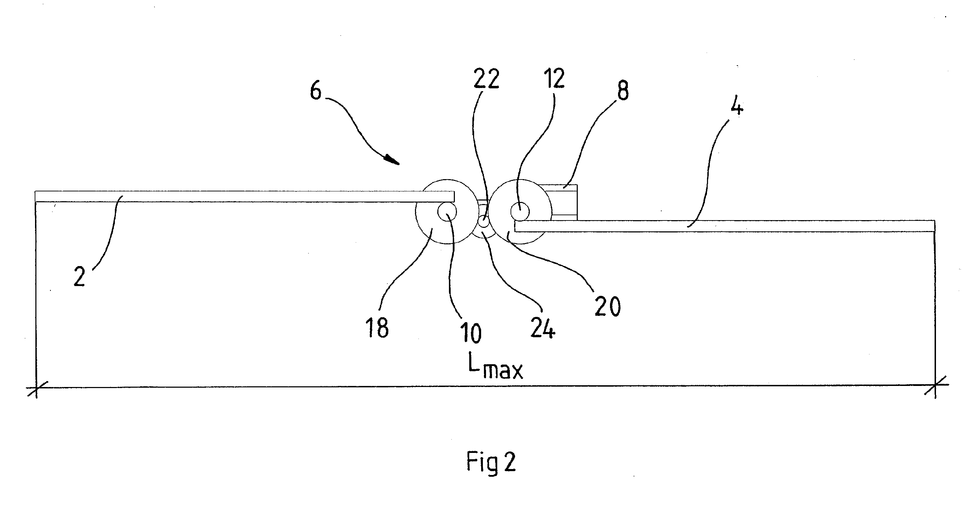

It will be apparent from Fig. 2, which shows the drive gear in the maximum protracted, that the maximum length, L_{max,} of the drive gear is greater than the length of the two gear racks 2 and 4 and more precisely the distance A plus twice the length of the racks, i.e. according to the reference numerals in Fig. 1, Lₘₐₓ=A+2xB.

If, for example, the synchronisation device is realised using a chain or belt drive (and not with the third gear wheel 22 as major component), A may be increased considerably more than is shown in the Figures.

The first gear wheels 10 and 12 are in mesh with the two gear racks 2 and 4, these being displaced wholly or partly in a counter-directed, synchronous movement. When the drive gear is in the wholly retracted state, the gear racks 2 and 4 are in mesh with the two first gear wheels 10 and 12, and at maximum protracted state, the gear racks 2 and 4 are only in mesh with one of the first gear wheels 10 and 12, since the gear racks 2 and 4 release the engagement with one of the first gear wheels 10 and 12 and achieve the extra length A.

The gear wheel device 6 cooperates with a guide member which is designed to permit the racks 2 and 4 to move in a longitudinal movement inside the column, but which simultaneously prevent the racks from moving transversely in relation to the longitudinal direction of the drive gear and their own longitudinal directions, i.e. out of engagement with the gear wheels 10 and 12.

The racks 2 and 4 are provided with cogs on their mutually facing longitudinal sides, by which means meshing with the first gear wheels is achieved. The racks 2 and 4 are secured in the upper and lower regions of the table, respectively, in order, with the aid of the drive gear, to raise and lower the table to their maximum protracted upper position and maximum retracted lower position, respectively, the maximum adjustment region being shown in Fig. 2.

The first gear wheels 10 and 12 are of smaller diameter than the second gear wheels 18 and 20, and the third gear wheel 22 is of smaller diameter than the fourth gear wheel 24. Further, the drive motor 8 drives the fourth gear wheel 24 by the intermediary of a worm gear. As a result, suitable downward shift of the speed of the drive motor 8 is achieved, to the speed of the two first gear wheels 10 and 12 which gives a suitable displacement speed of the two gear racks 2 and 4.

A feature common to the first and second gear wheels included in the gear wheel device 6 is that their axes lie in a common plane which is parallel with the longitudinal directions of the racks 2 and 4.

Fig. 1 shows the cogged racks 2 and 4 in a retracted state, the racks 2 and 4 being of a length which corresponds to the telescopic parts of the lifting column. This entails that the lower limit of the table for adjustment region cannot be less than the length of the racks 2 and 4 in the retracted state.

In this embodiment, the drive motor 8 is, as was mentioned above, designed with a worm gear which has a self-locking effect, in which instance the drive gear does not need a specific brake in order to keep the table in a stationary position, even under the action of a great external load.

### DESCRIPTION OF ALTERNATIVE EMBODIMENT

In order to be able to connect a larger drive motor to the drive gear, with a higher speed, the gear wheel device 6 may alternatively be interconnected to a planetary gear which is connected to the drive motor 8 in order to obtain a higher downshift of the speed.

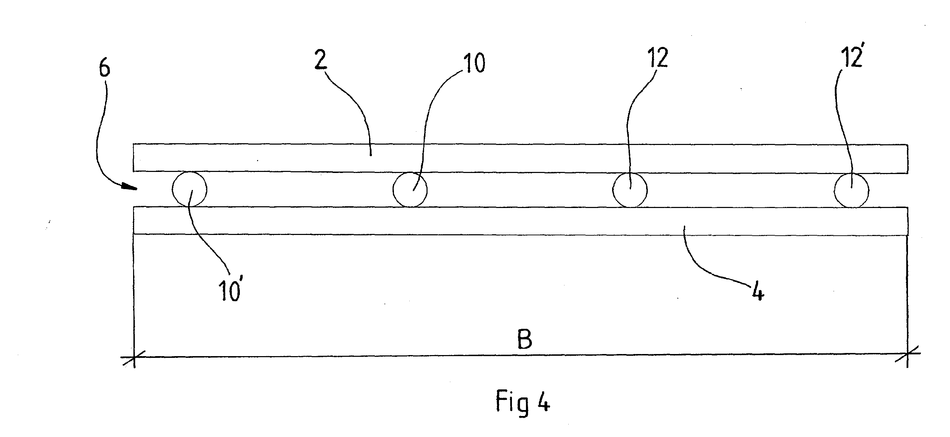

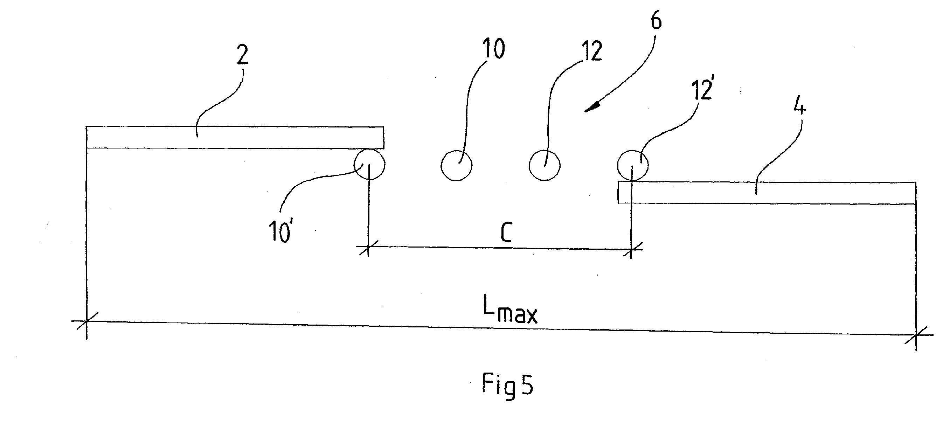

In an alternative embodiment, according to Figs. 4 and 5, more than two first gear wheels 10 and 12 may be connected in line with one another, for example the first gear wheels 10, 10', 12 and 12'.

It will be apparent from Fig. 5, which shows the alternative embodiment in the maximum protracted state, the distance Lₘₐₓ, that the maximum length of the drive gear is greater than the length of the two gear racks 2 and 4, and more precisely the distance C plus twice the length of the racks, i.e. according to the reference numerals in Fig. 4 and Fig. 5, Lₘₐₓ=C+2xB.

Regardless of whether the two first 10 and 12 or the four first (or more) gear wheels 10, 10', 12 and 12' are employed, the synchronisation device may also be realised by belt drive with a double sided cogged belt as major component. The cogged belt functions as a connecting element between the first gear wheels 10 and 12 and the cogged racks 2 and 4. The cogged belt passes around and is in mesh with the first gear wheels 10 and 12 at the same time as running along a part of the length of the cogged racks 2 and 4 and is in mesh with them.

In this embodiment, the intermediate or third gear wheel 22 which interconnects the first gear wheels 10 and 12 is not necessary, since they are then synchronised and driven by the cogged belt. By such means, meshing of the racks 2 and 4 both gently and without play, as well as synchronously with the first gear wheels 10 and 12 will be ensured when the gear racks 2 and 4 move from a completely protracted state to a completely retracted state.

Using the cogged belt, it is possible to dispense with the second gear wheels 18 and 20, the third gear wheel 22 and the fourth gear wheel 24. The drive motor 8 is then, possibly by the intermediary of a reduction gear, in mesh with the cogged belt which simultaneously and synchronously drives the gear wheel device 6.

The synchronisation device may also be realised by means of a chain as major component, provided that the racks 2 and 4 are fitted with engagement members which engage with and are driven by the outside of the chain, fully in analogy with the above-described belt drive.

The synchronisation device may also be realised by gears that function as connecting elements between the gear wheels in the gear wheel device 6 and drive the cogged racks 2 and 4 in accordance with the foregoing.

## Claims

1. A linear drive gear comprising two cogged racks (2, 4) which are drivable reciprocally in opposite directions by means of a gear wheel device (6) and a drive motor (8) **characterised in that** the gear wheel device (6) comprises at least two first gear wheels (10, 12) which are disposed spaced apart in the longitudinal direction of the racks, which are interconnected for synchronous rotation and which are disposed between the cogged racks for meshing with and driving them at least when the racks are wholly or partly displaced towards one another.

2. The linear drive gear as claimed in Claim 1, **characterised in that** the gear wheel device (6) is fixedly mounted for cooperation with a guide member which is designed to permit longitudinal movement of the racks (2, 4) but prevent transverse movement thereof, i.e. out of engagement with the first gear wheels (10, 12).

3. The linear drive gear as claimed in Claim 1 or 2, **characterised in that** the gear wheel device (6) is drivingly connected to the drive motor (8).

4. The linear drive gear as claimed in any of Claims 1 to 3, **characterised in that** the gear wheel device (6) includes two second gear wheels (18, 20) which are of greater diameter than the first gear wheels (10, 12) and which are rotatably united with each of the first gear wheels.

5. The linear drive gear as claimed in Claim 4, **characterised in that** a third gear wheel (22) is disposed in mesh with the two second gear wheels (18, 20).

6. The linear drive gear as claimed in Claim 5, **characterised in that** a fourth gear wheel (24) is rotatably fixedly united with the third gear wheel (22); and that the fourth gear wheel is of greater diameter than the third and drivable under the action of the drive motor (8).

7. The linear drive gear as claimed in any of Claims 4 to 6, **characterised in that** the axes of rotation of the first (10, 12) and second (18, 20) gear wheels lie in a common plane.

8. The linear drive gear as claimed in any of Claims 1 to 3, **characterised in that** the gear wheel device (6) includes at least four first gear wheels (10, 10', 12 and 12') in line with one another.

9. The linear drive gear as claimed in any of Claims 1 to 3 and 8, **characterised in that** the first gear wheels (10, 12; 10, 10'; 12, 12') are interconnected for synchronous movements by the intermediary of a belt- or chain arrangement.

10. The linear drive gear as claimed in Claim 9, **characterised in that** the belt- or chain arrangement displays a double sided belt or chain which circulates around the first gear wheels (10, 12; 10, 10'; 12, 12') and which, with its outside, is drivingly interconnected with the racks (2, 4).

11. A lifting column for a raisable and lowerable table, **characterised in that** it includes a linear drive gear as claimed in any of Claims 1 to 10.
